# EUROPÄISCHE PATENTSCHRIFT

(11) **EP 1 948 333 B1**
(45) Veröffentlichungstag und Bekanntmachung des Hinweises auf die Patenterteilung: **12.01.2011**
(21) Anmeldenummer: 06804384.3
(22) Anmeldetag: 09.11.2006
(51) Int. Cl.: A63C 5/00, A63C 5/12, B42D 15/10, G02B 3/00

(54) **SPORTGERÄT, INSBESONDERE SKI, SNOWBOARD ODER WASSERSPORTGERÄT**
SPORTS GEAR, PARTICULARLY SKI, SNOWBOARD, OR WATER SPORTS GEAR
APPAREIL DE SPORT NOTAMMENT SKI, SURF DES NEIGES OU APPAREIL DE SPORT AQUATIQUE

(30) Priorität: 18.11.2005 AT 7852005 U
(43) Veröffentlichungstag der Anmeldung: 30.07.2008
(73) Patentinhaber: Isosport Verbundbauteile Gesellschaft m.b.H., 7000 Eisenstadt (AT)
(72) Erfinder: KRENN, Klaus, A-7082 Donnerskirchen (AT)
(74) Vertreter: Gangl, Markus
(86) Internationale Anmeldenummer: PCT/AT2006/000460
(87) Internationale Veröffentlichungsnummer: WO 2007/056782

(56) Entgegenhaltungen:
- EP-A2- 0 340 211
- AT-U2- 7 246
- US-A- 4 417 784
- US-A- 5 723 200
- US-A1- 2003 096 084
- US-B1- 6 256 150

## Beschreibung

Die Erfindung betrifft ein Sportgerät, insbesondere Ski, Snowboard oder Wassersportgerät, umfassend einen Grundkörper, auf dessen Oberseite wenigstens bereichsweise eine im Wesentlichen transparente Folie angeordnet ist.

Gattungsgemäße Sportgeräte offenbart beispielsweise die EP 1 445 124. Beim Stand der Technik wird zwischen dem Grundkörper und der transparenten Folie ein Muster, beispielsweise ein Druckbild, eingebracht, wobei die transparente Folie bei der EP 1 445 124 ein Linsenmuster aufweist, das auf das Druckmuster abgestimmt ist und so beim Betrachter einen dreidimensionalen Oberflächen- bzw. Animationseffekt hervorruft. Nachteilig beim Stand der Technik ist die Tatsache, dass das Druckbild und das Linsenraster sehr genau aufeinander abgestimmt werden müssen, da bei nur geringsten Abweichungen zwischen Druckbild und Linsenraster kein dreidimensionaler Effekt mehr erzielt wird.

Dokument AT-U-007 246 offenbart eine transparente Folie mit beidseitigem Raster, aber keine Linsen.

Aufgabe der Erfindung ist es daher, ein Sportgerät der eingangs genannten Gattung zu schaffen, bei dem ein dreidimensionaler Oberflächen- bzw. Animationseffekt erzeugt wird und bei dem keine Rücksicht auf ein optionales Dekor zwischen Folie und Grundkörper genommen werden muss.

Erfindungsgemäß wird dies erreicht, indem die Folie auf Ihrer dem Grundkörper abgewandten Seite und auf Ihrer dem Grundkörper zugewandten Seite zumindest bereichsweise Linsenraster aufweist.

Insbesondere ist dabei vorgesehen, dass die Linsenraster auf Ihrer dem Grundkörper zugewandten Seite und auf Ihrer dem Grundkörper abgewandten Seite derart ausgebildet sind, dass sich einem Betrachter bei unterschiedlichen Blickwinkeln unterschiedliche Bilder zeigen. Der an der Folienoberfläche eintretende Lichtstrahl wird durch die erste Linse an der Oberseite gebrochen und abgelenkt und trifft nach seinem Weg durch die Folie auf eine Linse an der Folienrückseite. Diese Linse reflektiert ihrerseits den Lichtstrahl und ändert seine Richtung. Wenn nun der Lichtstrahl wieder an der oberflächenseitig sitzenden Linse der Folienoberseite trifft, wird dieser durch die Brechungseigenschaft der Linse ein weiters Mal in seiner Richtung beeinflusst. Diese insgesamt dreifache optische Brechung bzw. Reflexion an den Linsenoberflächen der beiden Folienseiten erzeugen optische Überlagerungen und Lichtstrahlführungen, die den Eindruck großer Tiefenwirkung erwecken können oder beim Betrachter das Gefühl hervorrufen, dass im Sportgerät tiefliegende geometrische Figuren sitzen. Diese Strukturen können auch bei Änderung des Betrachtungswinkels als im Raum "schwebend" empfunden werden. Somit können Folien hergestellt werden, die bereits ohne zusätzliches Dekor beeindruckende dreidimensionale Effekte aufweisen. Möglich ist es auch, zwischen Grundkörper und transparenter Deckfolie Dekors einzubringen, wobei der Vorteil bei der vorliegenden Erfindung insbesondere der ist, dass die optischen 3D-Effekte unabhängig von jeder Drucktechnik funktionieren. Im Gegensatz zu herkömmlich verwendeten Siebdruckverfahren beim Stand der Technik können alternative Druckverfahren (z.B. Sublimations- oder Thermotransferverfahren) Einsatz finden, die an sich ungenauere Druckbilder liefern, aber im gegenständlichen Fall kostengünstiger ebenfalls den gewünschten dreidimensionalen Effekt hervorrufen.

Um besonders interessante und optisch ansprechende Muster zu erzeugen, ist vorgesehen, dass die Linsenraster zumindest bereichsweise von periodisch wiederkehrenden Linsen gebildet werden. In Abhängigkeit des gewünschten dreidimensionalen Musters wäre es denkbar, die Linsenraster derart auszubilden, dass die Linsen zumindest zweier Linsenraster dieselbe Form aufweisen. Übereinander angeordnete (Oberseite und Unterseite) Linsen mit gleicher und regelmäßiger Form erzeugen hohe Tiefenwirkung. Ausgedehnte dreidimensionale Muster können aber insbesondere dadurch erreicht werden, indem die Linsen zumindest zweier Linsenraster unterschiedliche Formen aufweisen, bzw. wenn verschiedene Linsen übereinander angeordnet sind.

Die Linsenmuster können in an sich bekannter Art und Weise gestaltet werden. Allerdings ist insbesondere vorgesehen, dass die Linsen zumindest bereichsweise in Draufsicht etwa kreisförmig oder ovalförmig ausgebildet sind. In beiden Fällen lassen sich regelmäßige dreidimensionale Muster erzeugen, wobei mit kreisförmigen Linsen sehr regelmäßige Muster, zum Teil mit unterschiedlichen Symmetrieeigenschaften, erzeugbar sind, während mit ovalförmigen Linsen dreidimensionale Effekte mit unterschiedlicher Querausrichtung im Vergleich zur Längsausrichtung des Sportgerätes erzielbar sind.

In einer bevorzugten Ausführungsvariante ist vorgesehen, dass die Linsen zumindest bereichsweise eine konkave Krümmung aufweisen. In diesem Fall handelt es sich um Zerstreuungslinsen, die gegebenenfalls auch einen Verkleinerungseffekt erzielen können. In einer besonders bevorzugten Ausführungsvariante ist vorgesehen, dass die Linsen zumindest bereichsweise eine konvexe Krümmung aufweisen. Ausgehend von der Folienquerschnittsebene, d.h. von einer Ebene parallel zum Grundkörper, sind die Linsenformen bezogen auf den Stand der Technik plankonvex. Die Kombination mehrerer übereinander, das heißt beidseitig der Folienquerschnittsebene angeordneter Linsenraster erzeugt eine besonders eindrucksvolle dreidimensionale Tiefenwirkung.

Es ist denkbar, bezogen auf die gesamte, im Wesentlichen transparente, Folie auf einer Seite beispielsweise eine konvexe Krümmung und auf der anderen Seite beispielsweise eine konkave Krümmung anzubringen. Denkbar sind aber selbstverständlich auch andere Kombinationen wie konvexe und konvexe oder konkave und konkave Krümmung. Außerdem ist es abschnittsweise denkbar, Linsen mit plankonvexer oder plankonkaver Krümmungen anzuordnen.

Bei Ausführungen, in denen die Linsen eine konkave oder konvexe Krümmung aufweisen, ist vorgesehen, dass die Krümmungsradien der Linsen zwischen 0,05 mm und 50 mm betragen. Besonders günstig sind Ausführungen mit Krümmungsradien zwischen 0,1 und 0,3 mm. Bei einer solchen Ausgestaltung von Linsen lassen sich Effekte erzielen, wobei die dreidimensionalen Muster eine Größe von bis zu mehreren Zentimetern aufweisen.

In einer weiteren Ausführungsvariante ist vorgesehen, dass zumindest abschnittsweise die Scheitelkrümmungspunkte von Linsen des Linsenrasters auf der dem Grundkörper zugewandten Seite und Scheitelkrümmungspunkte von Linsen des Linsenrasters auf der dem Grundkörper abgewandten Seite auf senkrecht zur Folie stehenden Linien (h) liegen. Mit anderen Worten bedeutet dies, dass jeweils Linsen an der Oberseite der Folie und Linsen an der Unterseite der Folie so angeordnet sind, dass sie an der Stelle ihrer maximalen oder minimalen Ausdehnung genau übereinander liegen. Anders ausgedrückt bedeutet dies, dass z.B. die Foliendicke an dieser Stelle ein Extremum aufweisen kann, und zwar dann, wenn zwei konvexe Krümmungen (Maximum) oder zwei konkave Krümmungen (Minimum) übereinanderliegen.

In einer weiteren Ausführungsvariante ist vorgesehen, dass zumindest drei Mittelpunkte von Krümmungen von Linsen eines Linsenrasters auf einer Ebene senkrecht zur Folie liegen. Dies bedeutet in anderen Worten ausgedrückt, dass mehrere Linsen eines Linsenrasters entlang einer Linie liegen, wobei es unabhängig ist, ob die Linsen eine konvexe oder konkave Oberfläche aufweisen und welche Querausdehnung die Linsen haben.

In einer weiteren bevorzugten Ausführungsvariante ist vorgesehen, dass zumindest eine Ebene eines Linsenrasters auf der dem Grundkörper zugewandten Seite mit zumindest einer Ebene eines Linsenrasters auf der dem Grundkörper abgewandten Seite einen von 0° verschiedenen Winkel (β) einschließt. Dies bedeutet wiederum, dass mehrere Linsen beispielsweise auf der Oberseite der Folie entlang einer Linie liegen und mehrere Linsen entlang einer Linie an der Unterseite der Folie liegen, wobei diese beiden Linien einen bestimmten Winkel einschließen. Bevorzugt ist vorgesehen, dass der Winkel (β) zwischen 15° und 75°, vorzugsweise zwischen 30° und 60° liegt. Bei einer solchen Ausführung wird ein starker Verzerreffekt erzielt.

Auf besonders einfache Art und Weise können außerdem dreidimensionale Effekte erzielt werden, indem das Linsenraster bereichsweise eine Vielzahl von, vorzugsweise parallel ausgerichteten, streifenförmigen Linsen aufweist. Außerdem kann vorgesehen sein, dass das Linsenraster bereichsweise eine Vielzahl von in einem regelmäßigen Muster angeordneten, noppenförmigen Linsen aufweist. Diese beiden zuvor genannten Typen von Linsenrastern erzielen auf einfache Art und Weise einen dreidimensionalen Effekt und können besonders einfach durch Prägung hergestellt werden.

Wie bereits in der Beschreibungseinleitung erwähnt wurde, ist es ein Ziel der Erfindung, dass ein allfälliges Muster zwischen Grundkörper und Linsenrasterfolie ein Dekor aufgebracht ist, wobei insbesondere vorgesehen ist, dass die Folie, auf der dem Grundkörper zugewandten Seite mit einem Dekor bedruckt ist. Der Vorteil bei einer solchen Verarbeitungsweise ist, dass durch das Aufbringen zweier Linsenraster einerseits wenig Rücksicht auf die genaue Geometrie des Dekors gelegt werden muss und andererseits die Verarbeitung, indem die Folie direkt bedruckt wird, besonders einfach erfolgen kann. Zur Verstärkung des dreidimensionalen Effektes kann vorgesehen sein, dass das Dekor in Form eines regelmäßigen geometrischen Musters ausgebildet ist.

Um diesen Effekt besonders stark zu erzielen, kann vorgesehen sein, dass das Dekor eine auf die Periodizität des Linsenrasters abgestimmte Periodizität aufweist.

Insgesamt beruhen einige der vorgenannten Effekte auch auf Moirée-Effekten. Um diesen Effekt noch zu verstärken, kann vorgesehen sein, dass die Richtung der Längserstreckung der Linsen und die Richtung senkrecht zur Periodizität des Dekors einen von 0 verschiedenen Winkel (α) einschließen. Dabei hat es sich als vorteilhaft erwiesen, wenn die Richtung der Periodizität der Linsen und die Richtung der Periodizität des Dekors einen von 0° verschiedenen Winkel (α) einschließen sowie wenn der Winkel (α) größer als 1° und kleiner als 15°. Erfindungsgemäße Folien können nach an sich bekanntem Stand der Technik hergestellt werden, ebenso das Sportgerät.

Günstig ist es, wenn die Folien aus einem im Wesentlichen transparenten Kunststoff, vorzugsweise einem thermoplastischen Kunststoff bestehen, damit der Effekt beider Linsenraster gut zum Tragen kommt. Es bietet sich an, wenn der Kunststoff aus der Gruppe PMMA (Polymethylmethacrylat), PC (Polycarbonat), PET (Polyethylenterephthalat), PP (Polypropylen), PA (Polyamid), ABS (Acrylnitrit-Butadien-Styrol) oder TPU (thermoplastisches Polyurethan), deren Blends und/oder deren Copolymere stammt.

Auch sollte die Folie eine gewisse Beständigkeit aufweisen, weshalb es besonders vorteilhaft ist, wenn die Folie aus Polyamid, vorzugsweise Polyamid vom Typ 11 oder Typ 12, oder deren Elastomere und Copolyamide besteht. Alternativ dazu kann vorgesehen sein, dass die Folie aus Polyurethan oder einem thermoplastischen Blend von Polyurethan mit Acrylnitril-Butadien-Styrol (ABS) besteht.

Um einerseits eine ausreichende Materialbeständigkeit sowie die erfindungsgemäßen Effekte erzielen zu können, hat es sich als günstig erwiesen, wenn die Dicke der Folie zwischen 0,2 mm und 0,8 mm, vorzugsweise bei etwas 0,5 mm, liegt.

Dabei ist es günstig, wenn die Durchmesser (n) der Linsen der Linsenraster 0,1 bis 0,3 mm, vorzugsweise 0,20 bis 0,25 mm, betragen.

Die Linsenraster sind aber selbstverständlich nicht auf die bislang genannten Linsenformen beschränkt. Insbesondere kann vorgesehen sein, dass das Linsenraster zumindest abschnittsweise eine Stablinsenform, späherische Linsenform, trigonale Pyramidenform, tetragonale Pyramidenform, rhomboedrische Form, oktaedrische Form, rhombische Pyramidenform und/oder hexagonale Pyramidenform aufweist. Selbstverständlich ist es dabei klar, dass auch nur Teile der entsprechenden Form (also z.B. ein halber Oktaeder) einen erfindungsgemäßen Linseneffekt erzielt.

Weitere Vorteile und Details der Erfindung werden anhand der schematischen Figuren und Figurenbeschreibungen erläutert. Dabei zeigt:
- Fig. 1: drei verschiedene erfindungsgemäße Sportgeräte mit Bereichen, auf denen die Folie mit Linsenrastern aufgebracht ist,
- Fig. 2: einen Querschnitt durch ein erfindungsgemäßes Sportgerät,
- Fig. 3: zwei Ansichten auf Folien unterschiedlicher Ausführungsbeispiele,
- Fig. 4: einen möglichen Strahlengang des Lichtes entlang der Folie und
- Fig. 5a, 5b, 5c, 5d: weitere Ausführungsbeispiele für die im Wesentlichen transparente Folie eines erfindungsgemäßen Sportgerätes in Querschnitt und Grundriss (5a, 5b) und nur im Grundriss (5c, 5d),
- Fig. 6a bis 6c: Ausführungsbeispiele zur Gestaltung der Linsen der Linsenraster,
- Fig. 7a, 7b, 7c, 7d: verschiedene Detailansichten von Linsenrastern und
- Fig. 8a, 8b: die optischen Erscheinungen verschiedener Linsenraster in einer etwa Maßstabsgetreuen Darstellung.

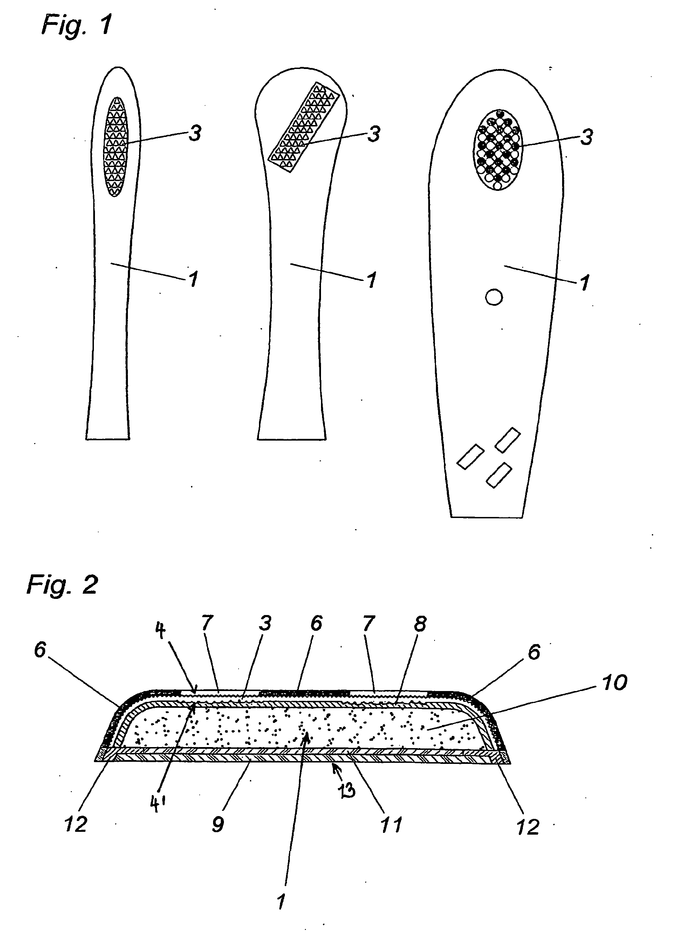

Fig. 1 zeit in schematischer Weise Ausführungsbeispiele erfindungsgemäßer Sportgeräte in unterschiedlichen Ausbildungen. Dabei handelt es sich (in Fig. 1 von links nach rechts) um einen Ski, ein Snowboard sowie um ein Wassersportgerät (z.B. Kiteboard, Wakeboard oder Surfboard). Das Sportgerät weist jeweils einen Grundkörper 1 auf, auf dem ein Abschnitt einer Folie 3 erkennbar ist, der sowohl auf ihrer dem Grundkörper 1 abgewandten Seite als auch auf ihrer dem Grundkörper 1 zugewandten Seite Linsenraster 4, 4' aufweist.

Fig. 2 zeigt einen Querschnitt durch ein als Ski ausgebildetes Sportgerät mit einem Grundkörper 1, an dessen Oberseite eine erfindungsgemäße Folie 3 angeordnet ist. Der Grundkörper 1 besteht in diesem Ausführungsbeispiel aus einem Obergurt 8, einem Untergurt 9, einem Kern 10, Lauffläche 13 und Stahlkanten 12 und einer stabilisierenden Zwischenschicht 11. Erkennbar ist, dass die Folie 3 auf ihrer am Grundkörper 1 abgewandten Außenseite unter Ausbildung von Sichtfenstem 7 von einer Abdeckschicht 6 abgedeckt ist. Alternativ könnte eine opake Bedruckung vorgesehen sein. Bevorzugt erstreckt sich der sichtbare Bereich der Folie 3 im Wesentlichen über die gesamte Oberseite des Sportgerätes 1.

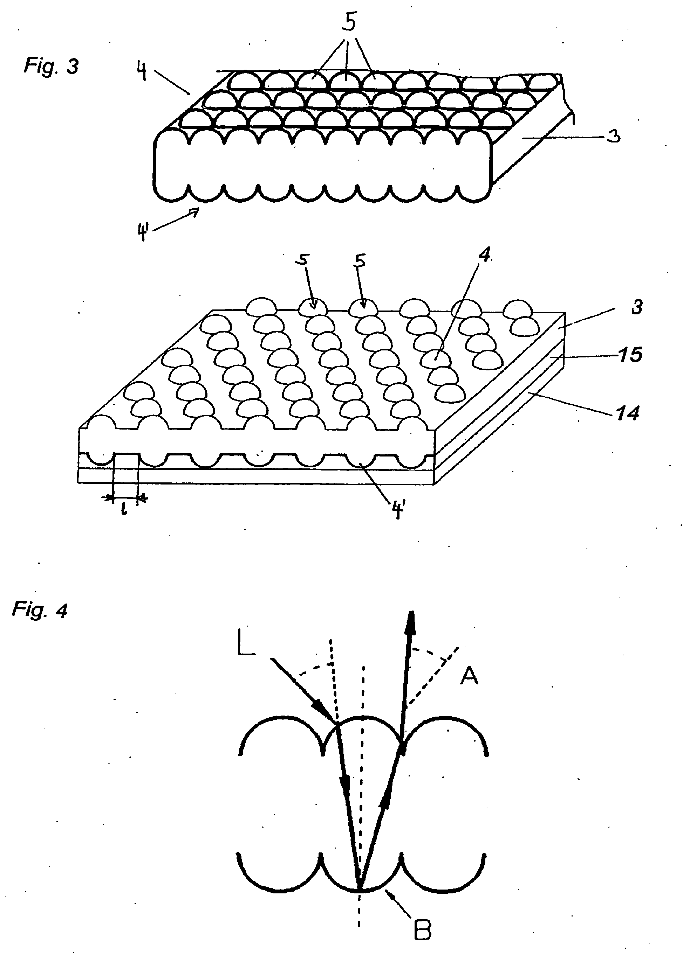

In Fig. 3 (oben) ist eine Folie 3 mit Linsenrastern 4, 4' an Ober- und Unterseite der Folie 3 zu erkennen. Die einzelnen Linsen 5 der Linsenraster 4, 4' sind eng aneinander gereiht. Die Fig. 3 (unten) zeigt eine ähnliche Folie 3 wie die obere Figur, allerdings weisen die Linsen 5 gewisse Abstände (I) zueinander auf. Darüber hinaus ist die Folie 3 auf eine Trägerschicht 14 (die Teil des Grundkörpers 1 ist) aufgebracht, wobei sich zwischen Folie 3 und Trägerschicht 14 eine transparente Kleberschicht 15 befindet.

Fig. 4 verdeutlicht anhand des Strahlenganges des Lichtes, wie ein solches dreidimensionales Muster bzw. ein solcher dreidimensionaler Effekt erzielt wird. Dabei trifft ein Lichtstrahl L auf die Oberfläche der Linse 5 und wird entsprechend den optischen Gesetzen beim Eintritt von einem optisch unterschiedlich dichtem Medium vom oder zum Lot (strichlierte Linie) gebrochen. An der Rückseite der Folie 3 bzw. an der gegenüberliegenden Linse 5 erfolgt entsprechend der Krümmung eine Reflexion zurück an die Oberseite der Folie. Dort erfolgt wiederum eine Brechung des Lichtstrahles beim Übergang von einem optischen Medium zum anderen optischen Medium.

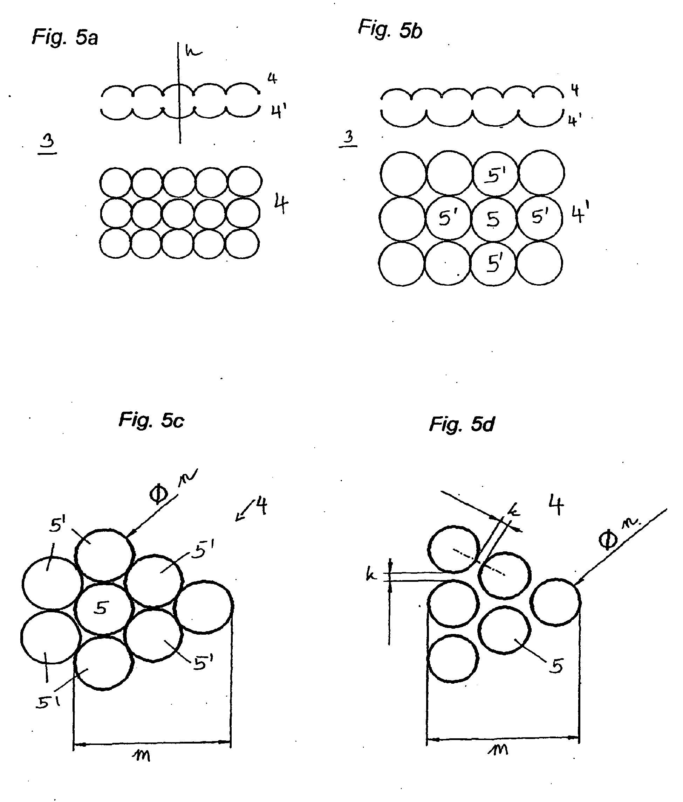

Fig. 5a zeigt eine erfindungsgemäße Folie 3 im Querschnitt und in Draufsicht, wobei an der Oberseite und an der Unterseite identische Linsenmuster bzw. -raster 4, 4' angebracht sind. Sowohl an der Oberseite als auch an der Unterseite befinden sich konvexe Krümmungen und die Krümmungsradien der Linsen 5 an der Oberseite und der Linsen 5 an der Unterseite liegen auf einer Linie (h) senkrecht zur Ebene der Folie. Somit handelt es sich effektiv um eine doppelt konvexe Linse. Im zweiten Ausführungsbeispiel nach Fig. 5b sind die Linsenmuster an der Oberseite und an der Unterseite unterschiedlich ausgebildet. Die Draufsicht auf das Linsenmuster von Fig. 5b ist identisch der Draufsicht von Fig. 5a und deshalb nicht gezeigt. Zu sehen ist eine Sicht auf die Unterseite der Folie von 5b (untere Darstellung).

Während die Linsen 5' der Figuren 5a und 5b quadratisch um eine zentrale Linse 5 angeordnet sind, ergibt sich aus der Linsenanordnung der Fig. 5c eine hexagonale Anordnung der Linsen 5' um die zentrale Linse 5.

In Fig. 5c ist außerdem ein Abstand (k) zwischen den Linsen vorgesehen. In einer Ausführungsvariante beträgt der Abstand (k) etwa 0,04 mm und der Linsendurchmesser (n) etwa 0,22 mm. In diesem Fall beträgt der Abstand (m) zwischen drei Linsenreihen etwa 0,67 mm.

Beim Beispiel von Fig. 5c könnte der Linsendurchmesser (n) etwa 0,25 mm betragen, sodass der Abstand (m) 0,68 mm beträgt. Damit ließen sich die Muster von Fig. 5c und 5d ohne Probleme abwechselnd aneinander reihen.

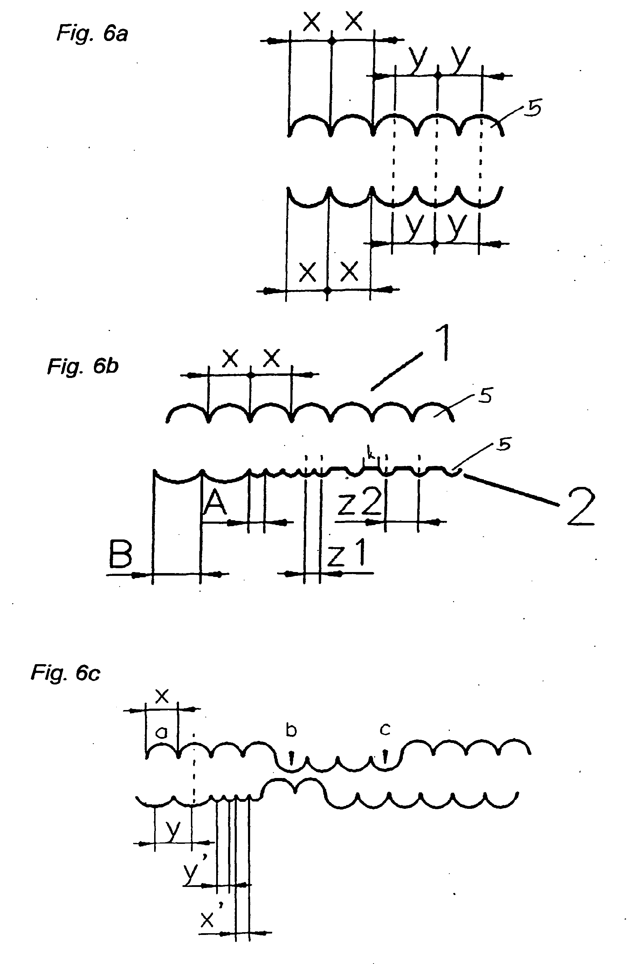

Fig. 6a bis 6c zeigen, wie die Dimensionierung der Linsen erfolgen kann. Beispielsweise können die Abstände x, x' gleich oder unterschiedlich sein, wobei x die Querausdehnung der Linse (bzw. den Durchmesser n bei kreisförmiger Linse) wiedergibt. y y' beschreibt die Abstände der Krümmungsradien zueinander bzw. der Extremstellen oder Scheitelpunkte der Krümmungen. Die Werte x, x' und y, y' können dabei gleich oder unterschiedlich sein. Außerdem können die Ausdehnungen entlang der Folie wie in Fig. 6b variieren. Die Linsenausdehnung der gezeigten Linsenraster ist z.B. an der Oberseite der Folie 3 einheitlich und nimmt an der Unterseite die Werte A und B ein. Die Linsen mit Ausdehnung A weisen z.B. Abstände z1 auf, wenn sie direkt aneinander grenzen oder den Wert z2 auf, wenn sich zwischen den Linsen 5 der Abstand k befindet. Bei der Folie gemäß Fig. 6b, 6c liegen im Bereich a zwei konvexe Krümmungen übereinander, wodurch sich entlang der strichlierten Linie ein Maximum der Foliendicke ergibt, während in der Position b konkave Krümmungen übereinander zu liegen kommen, woraus sich bei richtiger Positionierung ein Minimum ergeben kann. An der Stelle c liegt eine konkave und eine konvexe Krümmung übereinander.

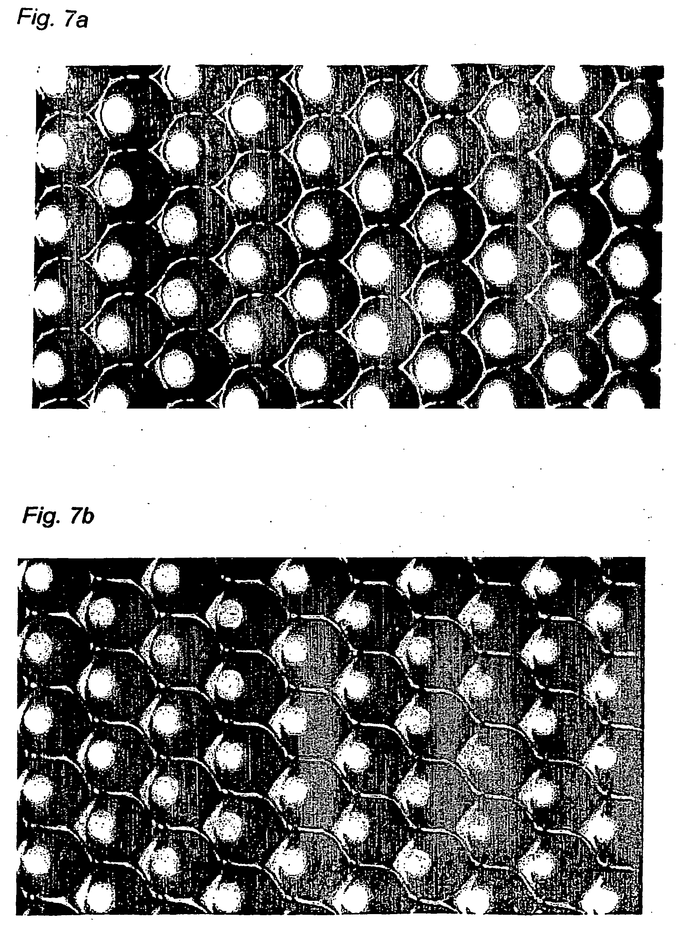

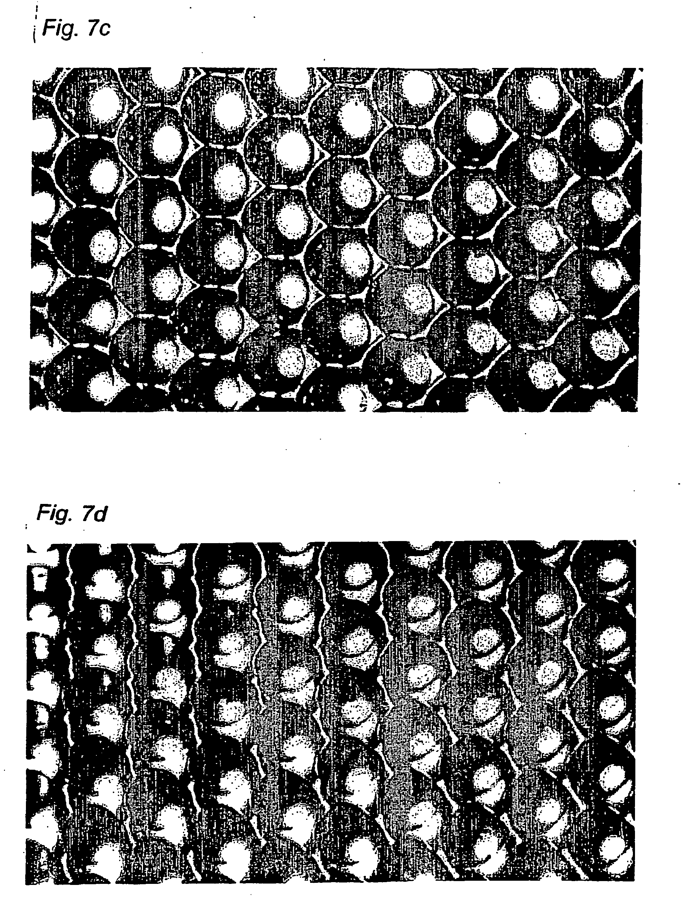

Die Fig. 7a bis 7d zeigen Detailansichten (in Draufsicht) etwa kreisförmiger Linsen eines Linsenrasters, bei denen die Linsen des oberen Linsenrasters gegenüber den Linsenrastern des darunterliegenden Linsenrasters kaum verschoben sind (7a), schräg verschoben sind (7b), horizontal verschoben sind (7c) und im Wesentlichen vertikal (7d) verschoben sind.

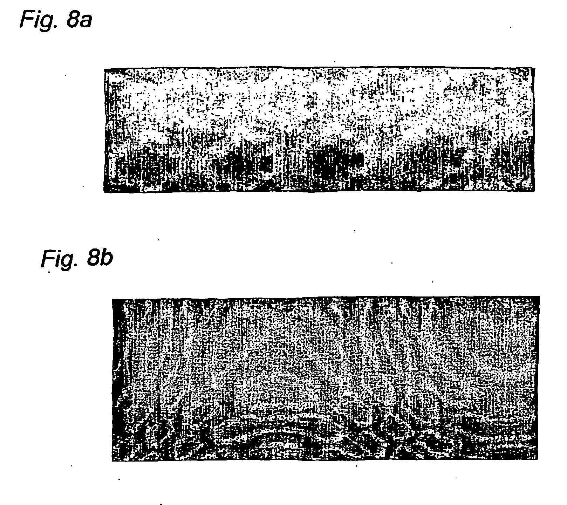

In den Fig. 8a und 8b sind die optischen Erscheinungen erfindungsgemäßer Folien gezeigt, bei denen Muster der oben genannten Varianten kombiniert wurden.

Zum Erzeugen der Folien werden Thermoplastfolien, wie z.B. Acrylnitril-Butadien-Styrol (ABS) oder thermoplastisches Polyurethan (TPU) verarbeitet. Die Foliendicke hängt stark von der eingestellten Extruderdüsenbreite ab. Die oberflächlichen Linsen werden kontinuierlich während der Extrusion oder auch nach Extrusion der Thermoplastfolie mittels Prägewalzen erzeugt. Dabei wird beispielsweise bei einer Prägetemperatur von etwa 180°C und einem Prägedruck von bis zu 220 bar eine Prägetiefe von ca. 80 µm erzeugt, wobei man in diesem Fall von einer Foliendicke von etwa 700 µm ausgehen kann. Die Rückseite der Thermoplastfolie kann elektrisch vorbehandelt werden, beispielsweise durch Koronabestrahlung, um das Bedrucken mit einem Druckmotiv zu ermöglichen. Das Bedrucken erfolgt direkt, d.h. ohne zusätzliches Druckpapier, auf die vorzugsweise vorbehandelte Folie mittels üblicher Drucktechniken, wie z.B. Thermotransfer-, Offset- oder Siebdruck. Durch Vorbehandeln der Folie 3 kann Druckfarbe in vorteilhafter Weise an der Folie fixiert werden.

## Patentansprüche

1. Sportgerät, insbesondere Ski, Snowboard oder Wassersportgerät, umfassend einen Grundkörper, auf dessen Oberseite wenigstens bereichsweise eine im Wesentlichen transparente Folie angeordnet ist, **dadurch gekennzeichnet, dass** die Folie (3) auf ihrer dem Grundkörper (1) abgewandten Seite und auf ihrer dem Grundkörper (1) zugewandten Seite zumindest bereichsweise Linsenraster (4, 4') aufweist.

2. Sportgerät nach Anspruch 1, **dadurch gekennzeichnet, dass** die Linsenraster (4, 4') auf Ihrer dem Grundkörper (1) zugewandten Seite und auf Ihrer dem Grundkörper (1) abgewandten Seite derart ausgebildet sind, dass sich einem Betrachter bei unterschiedlichen Blickwinkeln unterschiedliche Bilder zeigen.

3. Sportgerät nach Anspruch 1 oder 2, **dadurch gekennzeichnet, dass** die Linsen (5) zumindest zweier Linsenraster (4, 4') dieselbe Form aufweisen.

4. Sportgerät nach einem der Ansprüche 1 bis 3, **dadurch gekennzeichnet, dass** die Linsen (5) zumindest bereichsweise eine konkave Krümmung aufweisen.

5. Sportgerät nach einem der Ansprüche 1 bis 4, **dadurch gekennzeichnet, dass** die Linsen (5) zumindest bereichsweise eine konvexe Krümmung aufweisen.

6. Sportgerät nach Anspruch 4 oder 5, **dadurch gekennzeichnet, dass** zumindest abschnittsweise die Scheitelkrümmungspunkte von Linsen (5) des Linsenrasters (4) auf der dem Grundkörper (1) zugewandten Seite und Scheitelkrümmungspunkte von Linsen (5) des Linsenrasters (4') auf der dem Grundkörper (1) abgewandten Seite auf senkrecht zur Folie (3) stehenden Linien (h) liegen.

7. Sportgerät nach einem der Ansprüche 4 bis 6, **dadurch gekennzeichnet, dass** zumindest drei Scheitelkrümmungspunkte von Linsen (5) eines Linsenrasters (4, 4') auf einer Ebene senkrecht zur Folie (3) liegen.

8. Sportgerät nach Anspruch 7, **dadurch gekennzeichnet, dass** zumindest eine Ebene eines Linsenrasters (4) auf der dem Grundkörper zugewandten Seite mit zumindest einer Ebene eines Linsenrasters (4') auf der dem Grundkörper abgewandten Seite einen von 0° verschiedenen Winkel (β) einschließt.

9. Sportgerät nach Anspruch 8, **dadurch gekennzeichnet, dass** der Winkel (β) zwischen 15° und 75°, vorzugsweise zwischen 30° und 60° liegt.

10. Sportgerät nach einem der Ansprüche 1 bis 9, **dadurch gekennzeichnet, dass** die Folie (3), auf der dem Grundkörper zugewandten Seite mit einem Dekor bedruckt ist.

11. Sportgerät nach Anspruch 10, **dadurch gekennzeichnet, dass** das Dekor eine auf die Periodizität des Linsenrasters (4, 4') abgestimmte Periodizität aufweist.

12. Sportgerät nach Anspruch 10 oder 11, **dadurch gekennzeichnet, dass** die Richtung der Längserstreckung der Linsen (5) und die Richtung senkrecht zur Periodizität des Dekors einen von 0 verschiedenen Winkel (α) einschließen.

13. Sportgerät nach Anspruch 12, **dadurch gekennzeichnet, dass** die Richtung der Periodizität der Linsen (5) und die Richtung der Periodizität des Dekors einen von 0° verschiedenen Winkel (α) einschließen, der vorzugsweise größer als 1° und kleiner als 15° ist.

14. Sportgerät nach einem der Ansprüche 1 bis 13, **dadurch gekennzeichnet, dass** die Folie (3) aus Polyamid, vorzugsweise Polyamid vom Typ 11 oder Typ 12, oder deren Elastomere und/oder Copolyamide besteht.

15. Sportgerät nach einem der Ansprüche 1 bis 14, **dadurch gekennzeichnet, dass** die Folie (3) aus Polyurethan oder einem thermoplastischen Blend von Polyurethan mit Acrylnitril-Butadien-Styrol (ABS) besteht.

## Claims

1. A sports item, in particular a ski, snowboard or watersports item, including a main body, on the top side of which a substantially transparent film is arranged at least region-wise, **characterised in that** the film (3) has at least region-wise lens rasters (4, 4') on its side that is remote from the main body (1) and on its side that is towards the main body (1).

2. A sports item according to claim 1 **characterised in that** the lens rasters (4, 4') are provided on the side thereof towards the main body (1) and on the side thereof remote from the main body (1) in such a way that different images present themselves to a viewer at different viewing angles.

3. A sports item according to claim 1 or claim 2 **characterised in that** the lenses (5) of at least two lens rasters (4, 4') are of the same form.

4. A sports item according to one of claims 1 to 3 **characterised in that** the lenses (5) have at least region-wise a concave curvature.

5. A sports item according to one of claims 1 to 4 **characterised in that** the lenses (5) have at least region-wise a convex curvature.

6. A sports item according to claim 4 or claim 5 **characterised in that** at least in portion-wise manner the apex curvature points of lenses (5) of the lens raster (4) on the side towards the main body (1) and apex curvature points of lenses (5) of the lens raster (4') on the side remote from the main body (1) are on lines (h) perpendicular to the film (1).

7. A sports item according to one of claims 4 to 6 **characterised in that** at least three apex curvature points of lenses (5) of a lens raster (4, 4') are on a plane perpendicular to the film (3).

8. A sports item according to claim 7 **characterised in that** at least one plane of a lens raster (4) on the side towards the main body includes an angle (β) different from 0° with at least one plane of a lens raster (4') on the side remote from the main body.

9. A sports item according to claim 8 **characterised in that** the angle (β) is between 15° and 75°, preferably between 30° and 60°.

10. A sports item according to one of claims 1 to 9 **characterised in that** the film (3) is printed with a decoration on the side towards the main body.

11. A sports item according to claim 10 **characterised in that** the decoration is of a periodicity matched to the periodicity of the lens raster (4, 4').

12. A sports item according to claim 10 or claim 11 **characterised in that** the direction of the longitudinal extent of the lenses (5) and the direction perpendicular to the periodicity of the decoration include an angle (α) different from 0.

13. A sports item according to claim 12 **characterised in that** the direction of the periodicity of the lenses (5) and the direction of the periodicity of the decoration include an angle (α) different from 0°, which is preferably greater than 1° and less than 15°.

14. A sports item according to one of claims 1 to 13 **characterised in that** the film (3) comprises polyamide, preferably polyamide of type 11 or type 12, or elastomers and/or copolyamides thereof.

15. A sports item according to one of claims 1 to 14 **characterised in that** the film (3) comprises polyurethane or a thermoplastic blend of polyurethane with acrylonitrile-butadiene-styrene (ABS).

## Revendications

1. Appareil de sport, en particulier ski, surf des neiges ou appareil de sport aquatique, comportant un corps de base à la face supérieure duquel est disposé, au moins par endroits, un feuil essentiellement transparent, **caractérisé en ce que** le feuil (3) comporte au moins par endroits sur sa face détournée du corps de base (1) et sur sa face tournée vers le corps de base (1) des réseaux de lentilles (4, 4').

2. Appareil de sport selon la revendication 1, **caractérisé en ce que** sur sa face tournée vers le corps de base (1) et sur sa face détournée du corps de base (1), les réseaux de lentilles (4, 4') sont configurés de telle sorte que différentes images se présentent à un observateur sous différents angles d'observation.

3. Appareil de sport selon la revendication 1 ou 2, **caractérisé en ce que** les lentilles (5) d'au moins deux réseaux de lentilles (4, 4') présentent la même forme.

4. Appareil de sport selon l'une quelconque des revendications 1 à 3, **caractérisé en ce que** les lentilles (5) présentent au moins par endroits une courbure concave.

5. Appareil de sport selon l'une quelconque des revendications 1 à 4, **caractérisé en ce que** les lentilles (5) présentent au moins par endroits une courbure convexe.

6. Appareil de sport selon la revendication 4 ou 5, **caractérisé en ce qu'**au moins par endroits, les sommets de courbure de lentilles (5) du réseau de lentilles (4) du côté tourné vers le corps de base (1) et les sommets de courbure de lentilles (5) du réseau de lentilles (4') du côté détourné du corps de base (1) se trouvent sur des lignes (h) perpendiculaires au feuil (3).

7. Appareil de sport selon l'une quelconque des revendications 4 à 6, **caractérisé en ce qu'**au moins trois sommets de courbure de lentilles (5) d'un réseau de lentilles (4, 4') se trouvent dans un plan perpendiculaire au feuil (3).

8. Appareil de sport selon la revendication 7, **caractérisé en ce qu'**au moins un plan d'un réseau de lentilles (4) du côté tourné vers le corps de base fait avec au moins un plan d'un réseau de lentilles (4') du côté détourné du corps de base un angle (β) différent de 0°.

9. Appareil de sport selon la revendication 8, **caractérisé en ce que** l'angle (β) est compris entre 15° et 75°, de préférence entre 30° et 60°.

10. Appareil de sport selon l'une quelconque des revendications 1 à 9, **caractérisé en ce que**, sur le côté tourné vers le corps de base, le feuil (3) est imprimé d'un décor.

11. Appareil de sport selon la revendication 10, **caractérisé en ce que** le décor présente une périodicité adaptée à la périodicité du réseau de lentilles (4, 4').

12. Appareil de sport selon la revendication 10 ou 11, **caractérisé en ce que** la direction de l'extension longitudinale des lentilles (5) et la direction perpendiculaire à la périodicité du décor font un angle (α) différent de zéro.

13. Appareil de sport selon la revendication 12, **caractérisé en ce que** la direction de la périodicité des lentilles (5) et la direction de la périodicité du décor font un angle (α) différent de zéro, qui est de préférence supérieur à 1° et inférieur à 15°.

14. Appareil de sport selon l'une quelconque des revendications 1 à 13, **caractérisé en ce que** le feuil (3) consiste en polyamide, de préférence en polyamide du type 11 ou du type 12, ou en leurs élastomères et/ou en leurs copolymères.

15. Appareil de sport selon l'une quelconque des revendications 1 à 14, **caractérisé en ce que** le feuil (3) consiste en polyuréthane ou en un mélange thermoplastique du polyuréthane avec de l'acrylonitrile-butadiène-styréne (ABS).
